# EUROPEAN PATENT SPECIFICATION

(11) **EP 0 508 512 B1**
(45) Date of publication and mention of the grant of the patent: **26.07.1995**
(21) Application number: 92200733.1
(22) Date of filing: 13.03.1992
(51) Int. Cl.: H01M 2/36, B65G 47/24

(54) **Battery acid dumping apparatus**
Apparat zur Beseitigung von Batteriesäure
Appareil pour le déversement de l'acide d'une batterie

(30) Priority: 11.04.1991 GB 9107656
(43) Date of publication of application: 14.10.1992
(73) Proprietor: DELPHI FRANCE AUTOMOTIVE SYSTEMS, F-92231 Gennevilliers (FR)
(72) Inventor: Rumpler, Jerome Michel Jacques, F-57720 Obergailbach (FR); Muller, Simon Francois, F-57410 Achen (FR)
(74) Representative: Denton, Michael John

(56) References cited:
- EP-A- 0 164 147

## Description

This invention relates to a battery acid dumping apparatus, and in particular, to an apparatus for dumping the acid or other liquid from a lead-acid battery.

Lead-acid batteries have extensive use in the field of motor vehicles and other forms of transport, and also have other uses for electric power storage and supply. During production of a lead-acid battery, the cells of the battery are filled with electrolyte (usually, sulphuric acid) and the battery is then charged for the first time. Following charging, the electrolyte is tipped out (commonly known as dumping), and the battery is subsequently filled with fresh electrolyte before packaging and selling. These steps in the process of manufacture are necessary to ensure that the specific gravity of the electrolyte in each cell of a battery is substantially the same.

Several prior art arrangements are known for dumping the acid. GB Patent No. 1,536,981 discloses apparatus in which the batteries are loaded into a barrel, and the barrel is then rotated to dump the acid. This arrangement is very messy in terms of acid spill; has a high maintenance cost; batteries can fall out; and the process is not continuous, that is, the need to load and unload the barrel means that the batteries cannot be manufactured on a continuously running production line. US Patent No. 2,988,239 discloses apparatus in which batteries are held in place on a conveyor belt by securing means, and the conveyor belt and securing means are rotated to dump the acid. This arrangement requires adjustments to be made to the securing means for different sized (external dimensions) batteries, has a high maintenance cost, and, as mentioned above, is not a continuous process. US Patent No. 4,294,292 discloses apparatus in which batteries are transported on a conveyor belt, are tipped through 90 degrees by upset means onto a shelf, which then tips through a further 90 degrees. The process is then reversed. This arrangement is very complicated, requires the use of sensors to detect the presence of batteries, is not suitable for use with batteries of varying sizes (external dimensions), and has a high maintenance cost.

It is an object of the present invention to overcome the above mentioned disadvantages.

To this end, a battery acid dumping apparatus in accordance with the present invention comprises a tank for the collection of dumped acid or other liquid; a roller positioned substantially at each end of the tank and above an open top of the tank, one of the rollers being connectable to drive means; three or more conveyor belts positioned closely adjacent one another and mounted on the rollers for travel therebetween, the conveyor belts comprising a central conveyor belt, one outer conveyor belt, and another outer conveyor belt positioned on the opposite side of the central conveyor belt to said one outer conveyor belt, the central conveyor belt being movable along a path which lies in a first substantially flat horizontal plane, said one of the outer conveyor belts being movable along a path which rises from the upstream roller to a first station located above the first flat horizontal plane, lies in a second substantially flat horizontal plane between the first station and a second station, and then drops from the second station to the downstream roller, and said other of the outer conveyor belts being movable along a path which rises from the upstream roller to a third station located above the first flat horizontal plane and below the second flat horizontal plane, drops from the third station to a fourth station located below the first flat horizontal plane, lies in a third substantially flat horizontal plane between the fourth station and a fifth station, rises from the fifth station to a sixth station located above the first flat horizontal plane and below the second flat horizontal plane, and then drops from the sixth station to the downstream roller, the first station being located downstream of the third station and upstream of the fourth station, and the second station being located downstream of the fifth station and upstream of the sixth station; and guide means for positioning a lead-acid battery to straddle the central conveyor belt and said one of the outer conveyor belts at the upstream roller.

In use, batteries are guided onto the conveyor belts at the upstream roller. Then, as the conveyor belts move along their respective paths each battery is tipped from its upright position through an angle of between 120 and 180 degrees to dump the acid, and then tipped back to its upright position. Further details of this arrangement are given hereinafter. The angle to which a battery is tipped is dependent on the predetermined vertical distance between the first and third flat horizontal planes the external dimensions of the battery, and the number of conveyor belts. Although a typical range is given above for this angle, the preferred angle is approximately 140 degrees. Preferably, there are three conveyor belts.

Preferably, each station is defined by a guide rod or roller over which the respective conveyor belt passes.

A first side wall is preferably positioned adjacent the said one of the outer conveyor belts on the opposite side thereof to the central conveyor belt between the upstream roller and the first station, the first side wall curving to overlie the said one of the outer conveyor belts near the first station.

Preferably, a second side wall is positioned adjacent the said other of the outer conveyor belts on the opposite side thereof to the central conveyor belt between the fifth station and the sixth station, the second side wall curving to overlie the said other of the outer conveyor belts near the sixth station.

The said one of the outer conveyor belts preferably decends from the second station to the downstream roller at a shallower angle than the said other of the outer conveyor belts decends from the sixth station to the downstream roller.

Preferably, the drive means comprises an electric motor which drives the upstream roller.

The present invention will now be described, by way of example, with reference to the accompanying drawings, in which:-
Figure 1 is a diagrammatic cross-sectional view on the line 1-1 of Figure 2 of a battery acid dumping apparatus in accordance with the present invention;
Figure 2 is a top view of the battery acid dumping apparatus of Figure 1; and
Figure 3 is a side view of a lead-acid battery at various stages during passage through the battery acid dumping apparatus of Figure 1.

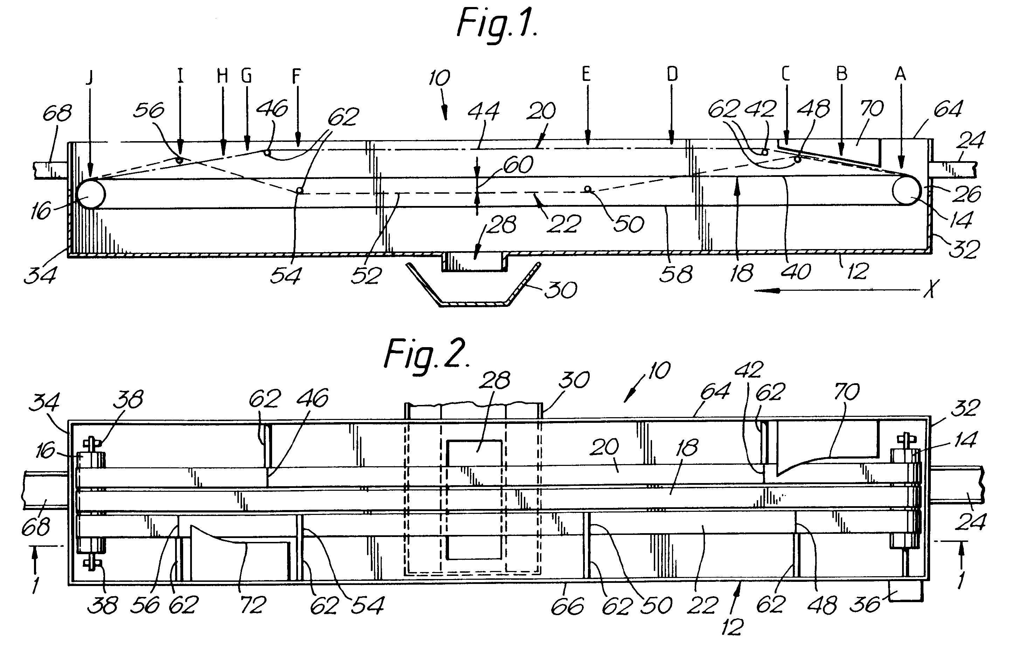

Referring to Figures 1 and 2, the battery acid dumping apparatus 10 comprises a tank 12; two rollers 14,16; three conveyor belts 18,20,22; and guide means 24. The tank 12 has an open top 26 and an opening 28 in the bottom thereof. The opening 28 allows acid or other liquid to drain from the tank 12 into a drainage channel 30 from which the acid can be removed for recycling or disposal.

The rollers 14,16 are positioned above the open top 26 of the tank 12, one at the upstream end 32 thereof, and the other at the downstream end 34 respectively. The upstream roller 14 is driven by drive means in the form of an electric motor 36. The downstream roller 16 is free rolling in bearings 38.

The three conveyor belts 18,20,22 are positioned closely adjacent to each other and are mounted on the rollers 14,16 for travel therebetween. The conveyor belts are endless belts and comprise a central conveyor belt 18, a first outer conveyor belt 20, and a second outer conveyor belt 22. The central conveyor belt 18 is driven by the upstream roller 14 to move along a path which lies in a first substantially flat horizontal plane 40 from the upstream roller to the downstream roller 16. The first outer conveyor belt 20 is driven by the upstream roller 14 to move from the upstream roller to the downstream roller 16 along a path which rises from the upstream roller to a first station 42, then lies in a second substantially flat horizontal plane 44 between the first station and a second station 46, and then drops from the second station to the downstream roller. The second outer conveyor belt 22 is driven by the upstream roller 14 to move from the upstream roller to the downstream roller 16 along a path which rises from the upstream roller to a third station 48, then drops from the third station to a fourth station 50, then lies in a third substantially flat horizontal plane 52 between the fourth station and a fifth station 54, then rises from the fifth station to a sixth station 56, and then drops from the sixth station to the downstream roller. All the conveyor belts 18,20,22 return from the downstream roller 16 to the upstream roller 14 along a path which lies in a fourth substantially flat horizontal plane 58. As can be seen from Figure 1, the second flat horizontal plane 44 is above the first flat horizontal plane 40; the first flat horizontal plane 40 is above the third flat horizontal plane 52; and the third flat horizontal plane 52 is above the fourth flat horizontal plane 58. The third flat horizontal plane 52 is preferably a predetermined vertical distance 60 from the first flat horizontal plane 40 as discussed in greater detail hereinafter.

Each station 42,46,48,50,54,56 is defined by a guide rod or roller 62 attached to the side walls 64,66 of the tank 12, or otherwise suitably mounted, over which the respective conveyor belt 18,20,22 passes. As can be seen from Figure 1, the first station 42 is downstream of the third station 48 and upstream of the fourth station 50, and the second station 46 is downstream of the fifth station 54 and upstream of the sixth station 56. As can also be seen from Figure 1, the angle of decent from the second station 46 to the downstream roller 16 is slightly less than the angle of decent from the sixth station 56 to the downstream roller. All the stations 42,46,50,54,56 are positioned between the upstream roller 14 and the downstream roller 16.

The guide means 24 is positioned at the upstream end 32 of the tank 12, and comprises a conveyor belt or other suitable transporting means. The guide means 24 is positioned such as to ensure that lead-acid batteries, on moving onto the conveyor belts 18,20,22 at the upstream roller 14, straddle the central conveyor belt 18 and the first outer conveyor belt 20. Output guide means 68 may also be provided at the downstream end 34 of the tank 12 for the removal of lead-acid batteries from the battery acid dumping apparatus 10.

A curved side wall or plough 70 may be positioned adjacent the first outer conveyor belt 20 between the upstream roller 14 and the first station 42. The curved side wall 70 is positioned on the opposite side of the first outer conveyor belt 20 to the central conveyor belt 18, and is gradually curved so as to overlie the first outer conveyor belt near the first station 42. Similarly, a curved side wall or plough 72 may be positioned adjacent the second outer conveyor belt 22 between the fifth station 54 and the sixth station 56. The curved side wall 72 is positioned on the opposite side of the second outer conveyor belt 22 to the central conveyor belt 18, and is gradually curved so as to overlie the second outer conveyor belt near the sixth station 56. The curved side walls 70,72 assist the tipping of lead-acid batteries as they pass through the battery acid dumping apparatus 10 as will be explained in more detail hereinafter. The curved side walls 70,72 may be attached to the side walls 64,66 respectively of the tank 12, or otherwise suitably mounted.

The conveyor belts 18,20,22 are preferably made from polypropylene, such as INTRALOX SERIAL 400. The tank 12 is preferably made from fibreglass polyester. The rollers 14,16 are preferably made from polypropylene, such as INTRALOX SERIAL 400.

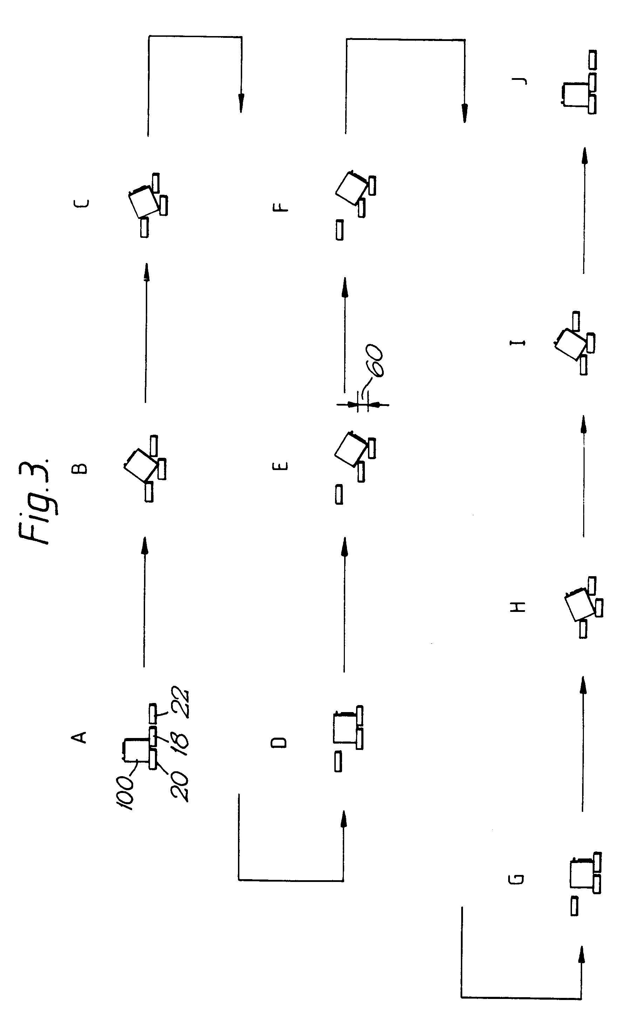

The operation of the battery acid dumping apparatus 10 will now be described in detail with reference to Figures 1 and 3. Various dispositions of a lead-acid battery 100 are shown in Figure 3 at points labelled A to J, which correspond to similarly labelled points in Figure 1. Lead-acid batteries travel through the battery acid dumping apparatus 10 in the direction X. The conveyor belts 18,20,22 move from the upstream roller 14 to the downstream roller 16 along their respective paths in substantially the direction X due the the drive means 36 acting on the upstream roller 14, and then return along the path which forms the fourth flat horizontal plane 58.

The lead-acid battery 100 containing acid is guided by the guide means 24 to straddle the central conveyor belt 18 and the first outer conveyor belt 20 at point A. Between the upstream roller 14 and the third station 48 the first and second outer conveyor belts 20,22 rise at substantially the same angle causing the lead-acid battery 100 to tip through an angle of approximately 30 degrees as shown at point B. The curved side wall 70 may assist this tipping of the lead-acid battery 100. Downstream of the third station 48, the first outer conveyor belt 20 continues to rise to the first station 42, but the second outer conveyor belt 22 drops causing the lead-acid battery 100 to tip over even further as shown at points C and D such that acid in the lead-acid battery 100 can start to drain out into the tank 12. Eventually the second outer conveyor belt 22 reaches the fourth station 50 as shown at point E. Dependent on the vertical distance 60 between the first flat horizontal plane 40 and the third flat horizontal plane 52, and the outer dimensions of the lead-acid battery 100, the lead-acid battery will by now have preferably been tipped through an angle of anywhere between 120 and 180 degrees (preferably approximately 140 degrees), relative to its upright position.

The lead-acid battery 100 remains at this angle between points E and F allowing substantially all the acid to drain from the lead-acid battery. At the fifth station 54, the second outer conveyor belt 22 starts to rise, and at the second station 46, the first outer conveyor belt 20 begins to fall, such that the lead-acid battery 100 tips back as shown at point G. Where a lead-acid battery has tipped through 180 degrees, the curved side wall 72 assists the lead-acid battery to tip back to the position shown at point G. Downstream of point G, the second outer conveyor belt 22 continues to rise as the first outer conveyor belt 20 continues to fall, until the second outer conveyor belt reaches the sixth station 56, and the lead-acid battery 100 continues to tip back towards its upright position as shown at points H and I. Downstream of the sixth station 56 both the first and second outer conveyor belts 20,22 fall, and the lead-acid battery 100 returns to its upright position, now substantially empty of acid. The lead-acid battery 100 leaves the battery acid dumping apparatus 10 by way of output guide means 68. Whilst only one lead-acid battery 100 is shown, it will be appreciated that a number of lead-acid batteries may pass through the battery acid dumping apparatus 10 at any one time and on a continuous basis.

Whilst the drive means 36 has been shown to drive the upstream roller 14, with the downstream roller 16 free running, it will be appreciated that the downstream roller may be driven, with the upstream roller free running.

Whilst the above embodiment has been described using three conveyor belts, more than three could be used. For example, each of the conveyor belts described above could comprise two or more belts. Further, additional belts may be positioned between the central conveyor belt and the outer conveyor belts. Such changes can be made in order to alter the angle to which a battery is tipped and/or to change the speed of through-put.

The battery acid dumping apparatus 10 of the present invention has several advantages over the previously known arrangements. It is very simple and clean, with little splashing of acid, and provides low maintenance costs. The acid can be easily collected for cleaning and recycling if desired. Lead-acid batteries can pass through the apparatus in a continuous line, without any stoppages for loading or unloading, thereby providing a continuous process, and a quick throughput. There is no need to make adjustments for batteries of varying sizes as the apparatus can handle mixed sizes of batteries. There is no need to provide sensors for detecting the presence of a lead-acid battery. The apparatus is cheap and can be run on an automatic basis with little or no surveillance. A single motor can be used to run the apparatus thereby providing low running costs.

## Claims

1. A battery acid dumping apparatus (10) comprising a tank (12) for the collection of dumped acid or other liquid; characterised by a roller (14,16) positioned substantially at each end (32,34) of the tank and above an open top (26) of the tank, one of the rollers being connectable to drive means (36); three or more conveyor belts (18,20,22) positioned closely adjacent one another and mounted on the rollers for travel therebetween, the conveyor belts comprising a central conveyor belt (18), one outer conveyor belt (20), and another outer conveyor belt (22) positioned on the opposite side of the central conveyor belt to said one outer conveyor belt, the central conveyor belt being movable along a path which lies in a first substantially flat horizontal plane (40), said one (20) of the outer conveyor belts being movable along a path which rises from the upstream roller (14) to a first station (42) located above the first flat horizontal plane, lies in a second substantially flat horizontal plane (44) between the first station and a second station (46), and then drops from the second station to the downstream roller (16), and said other (22) of the outer conveyor belts being movable along a path which rises from the upstream roller to a third station (48) located above the first flat horizontal plane and below the second flat horizontal plane, drops from the third station to a fourth station (50) located below the first flat horizontal plane, lies in a third substantially flat horizontal plane (52) between the fourth station and a fifth station (54), rises from the fifth station to a sixth station (56) located above the first flat horizontal plane and below the second flat horizontal plane, and then drops from the sixth station to the downstream roller, the first station being located downstream of the third station and upstream of the fourth station, and the second station being located downstream of the fifth station and upstream of the sixth station; and guide means (24) for positioning a lead-acid battery to straddle the central conveyor belt and said one of the outer conveyor belts at the upstream roller.

2. A battery acid dumping apparatus as claimed in claim 1, comprising three conveyor belts (18,20,22).

3. A battery acid dumping apparatus as claimed in claim 1 or claim 2, wherein each station is defined by a guide rod or roller (62) over which the respective conveyor belt (18,20,22) passes.

4. A battery acid dumping apparatus as claimed in any one of claims 1 to 3, wherein a first side wall (70) is positioned adjacent the said one (20) of the outer conveyor belts on the opposite side thereof to the central conveyor belt (18) between the upstream roller (14) and the first station (42), the first side wall curving to overlie the said one of the outer conveyor belts near the first station.

5. A battery acid dumping apparatus as claimed in any one of claims 1 to 4, wherein a second side wall (72) is positioned adjacent the said other (22) of the outer conveyor belts on the opposite side thereof to the central conveyor belt (18) between the fifth station (54) and the sixth station (56), the second side wall curving to overlie the said other of the outer conveyor belts near the sixth station.

6. A battery acid dumping apparatus as claimed in any one of claims 1 to 5, wherein the said one (20) of the outer conveyor belts descends from the second station (46) to the downstream roller (16) at a shallower angle than the said other (22) of the outer conveyor belts descends from the sixth station (56) to the downstream roller.

7. A battery acid dumping apparatus as claimed in any one of claims 1 to 6, wherein the first flat horizontal plane (40) is a predetermined vertical distance (60) from the third flat horizontal plane (52) such that a lead-acid battery (100) is at an angle of between 120 and 180 degrees from its upright position when travelling from the fourth station (50) to the fifth station (54).

8. A battery acid dumping apparatus as claimed in claim 7, wherein the vertical distance (60) is such that the angle is approximately 140 degrees.

9. A battery acid dumping apparatus as claimed in any one of claims 1 to 8, wherein the drive means comprises an electric motor (36) which drives the upstream roller (14)

## Patentansprüche

1. Eine Vorrichtung zum Entleeren von Batteriesäure (10) mit einem Tank (12) für das Sammeln von entleerter Säure oder anderer Flüssigkeit;
**gekennzeichnet** durch
eine Walze (14, 16) die im wesentlichen an jedem Ende (32, 34) des Tanks und über einer offenen Oberseite (26) des Tanks positioniert ist, wobei eine der Walzen mit Antriebsmitteln (36) verbindbar ist; drei oder mehr Förderbänder (18, 20, 22), die eng benachbart zueinander positioniert, und auf den Walzen zur Bewegung dazwischen befestigt sind, wobei die Förderbänder ein zentrales Förderband (18), ein äußeres Förderband (20) und ein weiteres äußeres Förderband (22) umfassen, das auf der gegenüberliegenden Seite des zentrales Förderbandes zu dem einen äußeren Förderband positioniert ist, das zentrale Förderband entlang eines Weges beweglich ist, der in einer ersten im wesentlichen flachen horizontalen Ebene (40) liegt, das eine (20) der äußeren Förderbänder entlang eines Weges beweglich ist, der von der stromaufwärtigen Walze (14) zu einer ersten Station (42) ansteigt, die oberhalb der ersten flachen horizontalen Ebene angeordnet ist, in einer zweiten im wesentlichen flachen horizontalen Ebene (44) zwischen der ersten Station und einer zweiten Station (46) liegt, und dann von der zweiten Station zu der stromabwärtigen Walze (16) abfällt, und das andere (22) der äußeren Förderbänder, das entlang eines Weges beweglich ist, der von der stromabwärtigen Walze zu einer dritten Station (48) ansteigt, die oberhalb der ersten flachen horizontalen Ebene und unterhalb der zweiten flachen horizontalen Ebene angeordnet ist, von der dritten Station zu einer vierten Station (50), die unterhalb der ersten flachen horizontalen Ebene angeordnet ist, abfällt, in einer dritten im wesentlichen flachen horizontalen Ebene (52) zwischen der vierten Station und einer fünften Station (54) liegt, von der fünften Station zu einer sechsten Station (56), die oberhalb der ersten flachen horizontalen Ebene und unterhalb der zweiten horizontalen Ebene ansteigt, und dann von der sechsten Station zu der stromabwärtigen Walze abfällt, wobei die erste Station stromabwärts von der dritten Station und stromaufwärts von der vierten Station angeordnet ist, und die zweite Station stromabwärts von der fünften Station und stromaufwärts von der sechsten Station angeordnet ist; und Führungsmittel (24) zur Positionierung einer Blei-Säurebatterie derart, daß sie das zentrale Förderband und das eine der äußeren Förderbänder auf der stromaufwärtigen Walze überspannt.

2. Eine Vorrichtung zum Entleeren von Batteriesäure nach Anspruch 1 mit drei Förderbändern (18, 20, 22).

3. Eine Vorrichtung zum Entleeren von Batteriesäure nach Anspruch 1 oder 2, in der jede Station durch eine Führungsstange oder Walze (62) definiert ist, über die die entsprechenden Förderbänder (18, 20, 22) laufen.

4. Eine Vorrichtung zum Entleeren von Batteriesäure nach einem der Anspüche 1 bis 3, in der eine erste Seitenwand (70) benachbart zu dem einen (20) der äußeren Förderbänder auf der gegenüberliegenden Seite zu dem zentralen Förderband (18) zwischen der stromaufwärtigen Walze (14) und der ersten Station (42) positioniert ist, wobei sich die erste Seitenwand so krümmt, daß sie über dem ersten der äußeren Förderbänder in der Nähe der ersten Station liegt.

5. Eine Vorrichtung zum Entleeren von Batteriesäure nach einem der Ansprüche 1 bis 4, in der eine zweite Seitenwand (72) benachbart dem anderen (22) der äußeren Förderbänder auf der gegenüberliegenden Seite zu dem zentralen Förderband (18) zwischen der fünften Station (54) und der sechsten Station (56) positioniert ist, wobei die zweite Seitenwand sich so krümmt, daß sie über dem anderen der äußeren Förderbänder in der Nähe der sechsten Station liegt.

6. Eine Vorrichtung zum Entleeren von Batteriesäure nach einem der Ansprüche 1 bis 5, in der das eine (20) der äußeren Förderbänder von der zweiten Station (46) zu der stromabwärtigen Walze (16) unter einem flacheren Winkel absteigt, als das andere (22) der äußeren Förderbänder von der sechsten Station (56) zu der stromabwärtigen Walze absteigt.

7. Eine Vorrichtung zum Entleeren von Batteriesäure nach einem der Ansprüche 1 bis 6, in der die erste flache horizontale Ebene (40) einen vorbestimmten vertikalen Abstand (60) von der dritten flachen horizontalen Ebene (52) aufweist derart, daß eine Blei-Säurebatterie (100) einen Winkel zwischen 120 Grad und 180 Grad von ihrer aufrechten Position aufweist, wenn sie sich von der vierten Station (50) zur fünften Station (54) bewegt.

8. Eine Vorrichtung zum Entleeren von Batteriesäure nach Anspruch 7, in der der vertikale Abstand (60) derart ist, daß der Winkel ungefähr 140 Grad beträgt.

9. Eine Vorrichtung zum Entleeren von Batteriesäure nach einem der Ansprüche 1 bis 8, in der die Antriebsmittel einen Elektromotor (36) umfassen, der die stromaufwärtige Walze (14) antreibt.

## Revendications

1. Dispositif (10) pour vidanger l'acide de batteries, comprenant un récipient (12) pour collecter l'acide vidangé ou un autre liquide, caractérisé par un rouleau (14,16) disposé essentiellement à chaque extrémité (32,34) du récipient et au-dessus d'une extrémité supérieure ouverte (26) du récipient, l'un des rouleaux pouvant être raccordé à des moyens d'entraînement (36); trois ou un plus grand nombre de bandes convoyeuses (18, 20,22) étant disposées réciproquement de manière à être en étroit voisinage et montées sur les rouleaux pour se déplacer entre ces derniers, les bandes convoyeuses comprenant une bande convoyeuse centrale (18), une première bande convoyeuse extérieure (20) et une autre bande convoyeuse extérieure (22) positionnée du côté de la bande convoyeuse centrale, situé à l'opposé de ladite bande convoyeuse extérieure, la bande convoyeuse centrale étant déplaçable le long d'un trajet qui se situe dans un premier plan horizontal essentiellement plat (40), ladite première (20) des bandes convoyeuses extérieures étant déplaçable le long d'un trajet qui s'élève depuis le rouleau amont (14) jusqu'à un premier poste (42) situé au-dessus dudit premier plan horizontal plat, est situé dans un second plan horizontal essentiellement plat (44) entre le premier poste et un second poste (46), puis s'abaisse depuis le second poste jusqu'au rouleau aval (16), et ladite autre (22) des bandes convoyeuses extérieures étant déplaçables le long d'un trajet qui s'élève depuis le rouleau amont jusqu'à un troisième poste (48) situé au-dessus du premier plan horizontal plat et au-dessous du second plan horizontal plat, s'abaisse depuis le troisième poste en direction d'un quatrième poste (50) situé au-dessous du premier plan horizontal plat, et est situé dans un troisième plan horizontal essentiellement plat (52) entre le quatrième poste et un cinquième poste (54), s'élève à partir du cinquième poste jusqu'à un sixième poste (56) situé au-dessus du premier plan horizontal plat et au-dessous du second plan horizontal plat, puis s'abaisse depuis le sixième poste jusqu'au rouleau aval, le premier poste étant situé en aval du troisième poste et en amont du quatrième poste, et le second poste étant situé en aval du quatrième poste et en amont du sixième poste; et des moyens de guidage (24) pour positionner une batterie au plomb de manière qu'elle s'étende sur la bande convoyeuse centrale et sur ladite première des bandes convoyeuses extérieures au niveau du rouleau amont.

2. Dispositif de vidange de l'acide de batteries selon la revendication 1, comprenant trois bandes convoyeuses (18,20,22).

3. Dispositif de vidange de l'acide de batteries selon la revendication 1 ou 2, dans lequel chaque poste est défini par une barre ou un rouleau de guidage (62), sur lequel passe la bande convoyeuse respective (18, 20, 22).

4. Dispositif de vidange de l'acide de batteries selon l'une quelconque des revendications 1 à 3, dans lequel une première paroi latérale (70) est positionnée au voisinage de ladite première (20) des bandes convoyeuses extérieures sur le côté de cette bande tourné à l'opposé de la bande convoyeuse centrale (18), entre le rouleau amont (14) et le premier poste (42), la première paroi latérale étant incurvée de manière à s'étendre au-dessus de ladite première des bandes convoyeuses extérieures à proximité du premier poste.

5. Dispositif de vidange de l'acide de batteries selon l'une quelconque des revendications 1 à 4, dans lequel une seconde paroi latérale (72) est disposée au voisinage de ladite autre (22) des bandes convoyeuses extérieures, sur le côté de cette bande situé à l'opposé de la bande convoyeuse, entre le cinquième poste (54) et le sixième poste (56), la seconde paroi latérale s'incurvant de manière à s'étendre au-dessus de ladite autre des bandes convoyeuses extérieures, à proximité du sixième poste.

6. Dispositif de vidange de l'acide de batteries selon l'une quelconque des revendications 1 à 5, dans lequel ladite première (20) des bandes convoyeuses extérieures s'abaisse depuis le second poste (46) en direction du rouleau aval (16), sous un angle inférieur à celui sous lequel ladite autre (22) des bandes convoyeuses extérieures s'abaisse depuis le sixième poste (56) en direction du rouleau aval.

7. Dispositif de vidange de l'acide de batteries selon l'une quelconque des revendications 1 à 6, dans lequel un premier plan horizontal plat (40) est situé à une distance verticale prédéterminée (60) du premier plan horizontal plat (52) de sorte qu'une batterie au plomb (100) fait un angle compris entre 120 et 180 degrés par rapport à sa position verticale, lorsqu'elle se déplace du quatrième poste (50) au cinquième poste (54).

8. Dispositif de vidange de l'acide de batteries selon la revendication 7, dans lequel la distance verticale (60) est telle que l'angle est égal à environ 140 degrés.

9. Dispositif de vidange de l'acide de batteries selon l'une quelconque des revendications 1 à 8, dans lequel les moyens d'entraînement comprennent un moteur électrique (36), qui entraîne le rouleau amont (14).
